(19) Europäisches Patentamt
European Patent Office
Office européen des brevets

(11) **EP 4 734 003 A1**

(12) **EUROPEAN PATENT APPLICATION**

(43) Date of publication:
29.04.2026 Bulletin 2026/18

(51) International Patent Classification (IPC):
*G06N 3/096* (2023.01)   *G06N 10/60* (2022.01)
*G06N 20/00* (2019.01)   *G06N 3/045* (2023.01)

(21) Application number: 25202933.5

(22) Date of filing: 18.09.2025

(52) Cooperative Patent Classification (CPC):
G06N 10/60; G06N 3/045; G06N 3/096;
G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.10.2024 IN 202421080344

(71) Applicant: Tata Consultancy Services Limited
Mumbai, Maharashtra 400 021 (IN)

(72) Inventors:
• KHANDELWAL, Ankit
  560066 Bangalore (IN)
• PRAMANIK, Sayantan
  560066 Bangalore (IN)
• CHANDRA, Mariswamy Girish
  560066 Bangalore (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR CONSTRUCTING CLASSICAL EQUIVALENT MODEL OF TRAINED QUANTUM MACHINE LEARNING MODEL**

(57) Existing techniques of constructing classical equivalents of QML models expand measurements from QML model as truncated Fourier series and find Fourier coefficients by solving an optimization problem. However, this is computationally expensive and since approximate Fourier coefficients are determined, the resulting classical surrogate does not necessarily give exactly same predictions as that of the QML model. Embodiments of the present disclosure provide a method and system for constructing classical equivalent of trained Quantum Machine Learning (QML) model by distilling knowledge from the QML model to a classical model. The method includes training QML model using a first dataset, creating a second dataset using measurements from the QML model, training classical model using the second dataset and learning a processing function using predictions of the classical model and target outputs. The trained classical model combined with the learned processing function serve as classical equivalent of the QML model.

FIG. 3A

## Description

CROSS-REFERENCE TO RELATED APPLICATIONS AND PRIORITY

The present application claims priority from Indian application no. 202421080344, filed on October 22, 2024.

TECHNICAL FIELD

The embodiments herein generally relate to the field of machine learning and more particularly, to a method and system for constructing classical equivalent model of trained Quantum Machine Learning (QML) model.

BACKGROUND

Quantum Machine Learning (QML) is emerging as a pivotal field, leveraging quantum computers' computational power. Quantum computers can process and spot patterns in data faster than classical machines, making quantum AI/ML tools more accurate and scalable. A quantum algorithm is realized via a quantum circuit using software tools. The quantum circuit represents the logical flow of operations specifying which gates act on which qubits and in what order. A compilation process translates the abstract circuit into a specific set of gate operations on the physical qubits. The compiled quantum circuit is then loaded onto the Quantum Processing Units (QPUs) that performs the specified gate operations on its physical qubits, wherein the QPU has a specific arrangement of qubits, such as a lattice structure. QML outperforms classical machine learning for specific problems. Although quantum computers are available for training the QML model, deployment of the model will remain an issue as real time access to the quantum computer for inference is not possible. This is because, currently, quantum computers are scarcely available and are expensive to use. In such a case, advantages of QML will not be realizable due to lack of access to the quantum computer. Hence, attempts have been made to develop classical surrogates of QML models. A classical surrogate is a classical machine learning model which can be efficiently obtained from a trained QML model and reproduces its input-output relations. As inference can be performed classically, the existence of a classical surrogate greatly enhances the applicability of a quantum learning strategy. Existing techniques expand measurements from QML model as truncated Fourier series and construct classical surrogate by finding Fourier coefficients by solving an optimization problem. However, this method is computationally expensive. Further, since approximate Fourier coefficients are determined, the resulting classical surrogate does not necessarily give exactly same predictions as that of the QML model.

SUMMARY

Embodiments of the present disclosure present technological improvements as solutions to one or more of the above-mentioned technical problems recognized by the inventors in conventional systems.
For example, in one embodiment, a method for constructing classical equivalent model of trained Quantum Machine Learning (QML) model is provided. The method includes receiving a first training dataset comprising a plurality of inputs and associated target outputs. Further the method includes training a Quantum Machine Learning (QML) model using the first training dataset. The method further includes generating a second training dataset using the trained QML model, wherein the second training dataset comprises the plurality of inputs and associated plurality of outputs measured from the trained QML model. Furthermore, the method includes training a classical machine learning model using the second training dataset to obtain a trained classical model and learning a processing function based on predictions from the trained classical model and the plurality of associated target outputs. Combination of the trained classical model and the learned processing function serve as a classical equivalent model of the QML model.
In another aspect, a system for constructing classical equivalent model of trained Quantum Machine Learning (QML) model is provided. The system comprises a classical computing system and a quantum computing system. The classical computing system comprising a memory storing instructions; one or more Input/Output (I/O) interfaces; and one or more classical hardware processors coupled to the memory via the one or more I/O interfaces. The quantum computing system comprises a plurality of Quantum Processing Units (QPUs), signal delivery system, control system and quantum memory. The one or more classical hardware processors are configured by the instructions to receive a first training dataset comprising a plurality of inputs and associated target outputs. Further, the one or more classical hardware processors and the plurality of QPUs are configured to train a Quantum Machine Learning (QML) model using the first training dataset. Further, the plurality of QPUs are configured to generate a second training dataset using the trained QML model, wherein the second training dataset comprises the plurality of inputs and associated plurality of outputs measured from the trained QML model. Furthermore, the one or more classical hardware processors are configured to train a classical machine learning model using the second training dataset to obtain a trained classical model and learn a processing function based on predictions from the trained classical model and the plurality of associated target outputs.

Combination of the trained classical model and the learned processing function serve as a classical equivalent model of the QML model.

In yet another aspect, there are provided one or more non-transitory machine-readable information storage mediums comprising one or more instructions, which when executed by one or more classical hardware processors and plurality of QPUs causes a method for constructing classical equivalent model of trained Quantum Machine Learning (QML) model. The method includes receiving a first training dataset comprising a plurality of inputs and associated target outputs. Further the method includes training a Quantum Machine Learning (QML) model using the first training dataset. The method further includes generating a second training dataset using the trained QML model, wherein the second training dataset comprises the plurality of inputs and associated plurality of outputs measured from the trained QML model. Furthermore, the method includes training a classical machine learning model using the second training dataset to obtain a trained classical model and learning a processing function based on predictions from the trained classical model and the plurality of associated target outputs. Combination of the trained classical model and the learned processing function serve as a classical equivalent model of the QML model.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an architectural overview of a system for constructing a classical equivalent model of a trained Quantum Machine Learning (QML) model, in accordance with some embodiments of the present disclosure.

FIG. 2 is a flow diagram illustrating a method for constructing the classical equivalent model of a trained QML model using system of FIG. 1, in accordance with some embodiments of the present disclosure.

FIG. 3A is a sequence diagram depicting process of training a QML model using system of FIG. 1, in accordance with some embodiments of the present disclosure.

FIG. 3B is a sequence diagram illustrating process of generating a second training dataset using the system of FIG. 1, in accordance with some embodiments of the present disclosure.

FIG. 3C is a sequence diagram depicting training of a classical machine learning model using system of FIG. 1 to obtain a classical equivalent model of the QML model, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing techniques of constructing classical surrogates of quantum machine learning models are computationally expensive and not accurate. Embodiments of the present disclosure provide a method and system for constructing classical equivalent model of trained Quantum Machine Learning (QML) model by distilling knowledge from the QML model to a classical model. The classical equivalent model of the QML model performs better than purely classical model for a given task. Initially, the QML model is trained using a first training dataset. Then, a second training dataset is generated by using measurements from the trained QML model. Finally, the classical model is trained using the second training dataset and a processing function is learnt using predictions of the classical model and target outputs. The trained classical model combined with the learned processing function serve as classical equivalent model of the QML model. The classical equivalent model can be used for inference on a classical computing system which is easily available and less expensive than quantum computing systems.

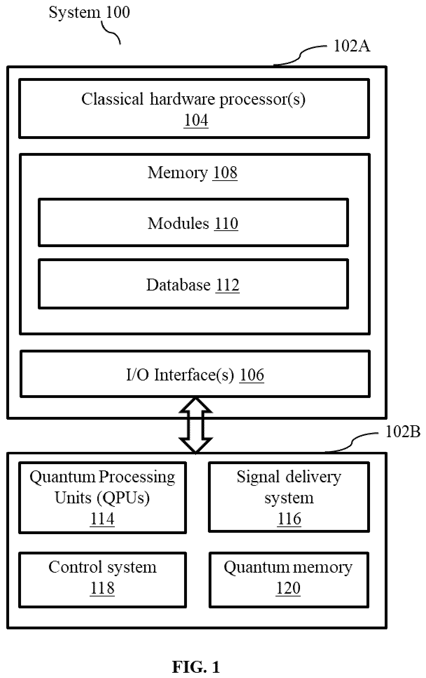

Referring now to the drawings, and more particularly to FIGS. 1 through 3C, where similar reference characters denote corresponding features consistently throughout the figures, there are shown preferred embodiments, and these embodiments are described in the context of the following exemplary system and/or method.

FIG. 1 illustrates an architectural overview of a system (100) for constructing classical equivalent model of trained Quantum Machine Learning (QML) model, in accordance with some embodiments of the present disclosure. The system 100 comprises a classical computing system 102A and a quantum computing system 102B. In an embodiment, the classical computing system 102A includes a hardware processor(s) 104, also referred to as classical hardware processors, Input/Output interface 106, and one or more data storage devices or a memory 108 operatively coupled to the processor(s) 104. The quantum computing system 102B includes a plurality of Quantum Processing Units (QPUs) 114, a signal delivery system 116, a control system 118, and a quantum memory 120.

Referring to the components of classical computing system 102A, in an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 108. In an embodiment, the classical computing system 102A can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices to receive the first training dataset or enable an end user to communicate with the system 100.

The memory 108 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 108 includes a plurality of modules 110 such data preprocessing module (not shown), Quantum Machine Learning (QML) model, classical machine learning model, and the like. The plurality of modules 110 include programs or coded instructions that supplement applications or functions performed by the system 100 for constructing classical equivalent model of trained Quantum Machine Learning (QML) model. The trained QML model includes the encoding, ansatz, and measurements comprised in the quantum computing system 102B and the trained circuit parameters stored in the classical computing system 102A. Thus, components of the trained QML model are split and present across the classical computing system 102A and the quantum computing system 102B. The plurality of modules 110, amongst other things, can include routines, programs, objects, components, and data structures, which performs particular tasks or implement particular abstract data types. The plurality of modules 110 may also be used as signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 108 may comprise information pertaining to input(s)/output(s) of each step performed by the processor(s) 104 of the system 100 and methods of the present disclosure. Further, the memory 108 includes a database 112. The database (or repository) 112 may include a plurality of abstracted pieces of code for refinement and data that is processed, received, or generated as a result of the execution of the plurality of modules comprised in the module(s) 110. The database can also store first training dataset, trained circuit parameters of QML model, second training dataset, classical equivalent model and so on.

Although the database 112 is shown internal to the system 100, it will be noted that, in alternate embodiments, the database 112 can also be implemented externally to the system 100, and communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). In an embodiment, the I/O interface 106 comprises a high speed digital interface, which connects the classical computing system 102A and the quantum computing system 102B.

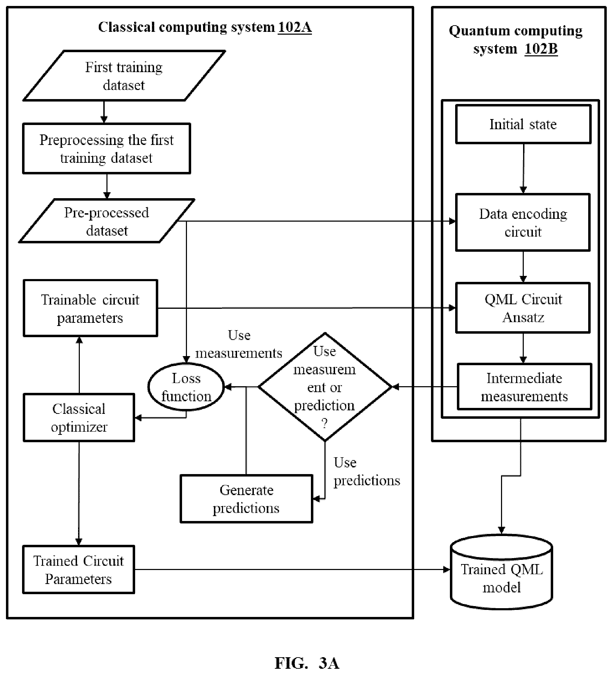

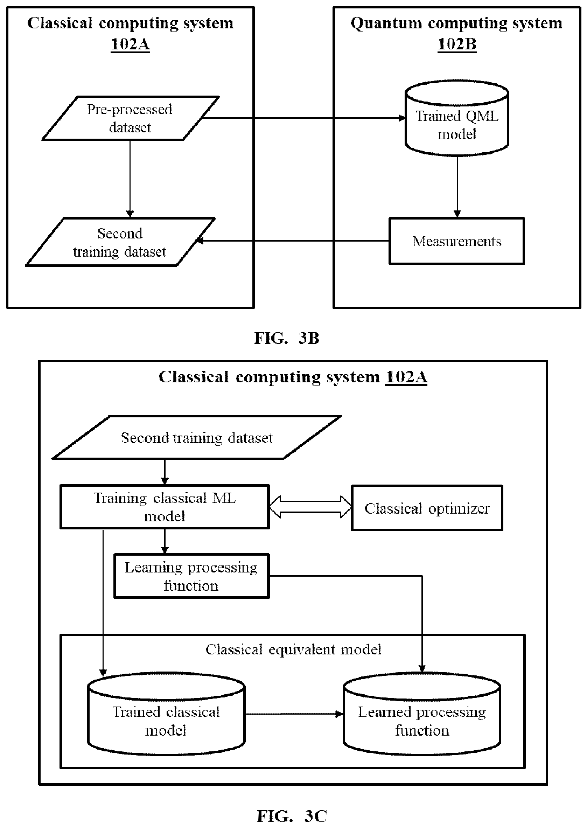

Referring to the components of the quantum computing system 102B, in an embodiment, the plurality of QPUs 114 are unentangled and hence alternatively referred to as plurality of unentangled QPUs. In an embodiment, the quantum computing system 102B can operate using gate-based models for quantum computing. For example, as also can be seen in FIG. 3A, the Qubits can be initialized in an initial state, and a quantum logic circuit comprised of a series of quantum logic gates can be applied to transform the qubits and extract measurements representing the output of the quantum computation. A quantum algorithm can be realized via the quantum circuit using software tools. The quantum circuit is constructed depending on the task or application and data. It represents the logical flow of operations specifying which gates act on which qubits and in what order. A data encoding process translates the abstract circuit into a specific set of gate operations on the physical qubits. The compiled quantum circuit is then loaded onto the Quantum Processing Units (QPUs) 114 of the quantum computing system 102B, which performs the specified gate operations on its physical qubits.

The example QPUs 114 shown in FIG. 1 may be implemented, for example, as a superconducting quantum integrated circuit that includes Qubit devices. The Qubit devices may be used to store and process quantum information, for example, by operating as ancilla Qubits, data Qubits or other types of Qubits in a quantum algorithm. Coupler devices in the superconducting quantum integrated circuit may be used to perform quantum logic operations on single qubits or conditional quantum logic operations on multiple qubits. In some instances, the conditional quantum logic can be performed in a manner that allows large-scale entanglement within the QPUs 114.

Control signals may be delivered to the superconducting quantum integrated circuit, for example, to manipulate the quantum states of individual Qubits and the joint states of multiple Qubits. In some instances, information can be read from the superconducting quantum integrated circuit by measuring the quantum states of the qubit devices. The QPUs 114 may be implemented using another type of physical system such as photonic, neural atoms, trapped ions, quantum dots, etc.

The QPUs 114 perform the specified gate operations on its physical qubits in accordance with the quantum circuit design. The operations include rotations, flips, and entanglement. During execution, the qubits evolve according to the quantum gates, entanglements, and measurements. As depicted in FIG. 3A, after the quantum operations, the qubits are measured. Each measurement collapses the qubit's superposition state to either 0 or 1. Repeated measurements enable estimating probabilities and computing the final result quantum computation, that is communicated to the classical computing system 102A over the high speed digital interface.

For example, the quantum memory 120 can receive control signals from the control system 118 and deliver the control signals to the QPUs 114. In some instances, the quantum memory 120 performs preprocessing, signal conditioning, or other operations to the control signals before delivering them to the QPUs 114. In an embodiment, the quantum memory 120 includes connectors or other hardware elements that transfer signals between the QPUs 114 and the control system 118. In an embodiment, the quantum memory 120 is a quantum-mechanical version of classical computer memory. The classical computer memory 108 stores information such as binary states and the quantum memory 120 stores a quantum state for later retrieval. These states hold useful computational information known as Qubits.

In the example quantum computer system 102B shown in FIG. 1, the control system 118 controls operation of the QPUs 114. The example control system 118 may include data processors, signal generators, interface components and other types of systems or subsystems. In some embodiments, the control system 118 includes a classical computing system that executes software to compile instructions for the QPUs 114. For example, the control system 118 may decompose a quantum logic circuit or quantum computing program into discrete control operations or sets of control operations that can be executed by the hardware in the QPUs 114. In some embodiments, the quantum computer system 102B includes multiple quantum information processors that operate as respective quantum processor units (QPUs) 114. In an embodiment, quantum simulators such as StateVector simulator, QASM simulator, Matrix product state simulator and Pennylane default qubit simulator etc. can be used during development before the final quantum algorithms can be finalized and executed on physical hardware with the QPUs 114.

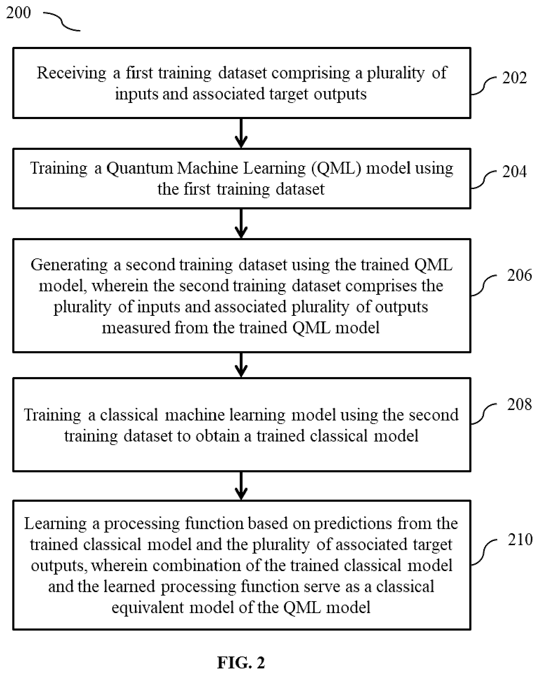

Functions of the components of the system 100 are now explained with reference to steps of flow diagrams in FIG. 2 through FIG. 3C. FIG. 2 is a flow diagram illustrating a method (200) for constructing classical equivalent model of trained Quantum Machine Learning (QML) model using system of FIG. 1, in accordance with some embodiments of the present disclosure.

In an embodiment, the system 100 comprises the classical computing system 102A with one or more data storage devices or the memory 108 operatively coupled to the processor(s) 104, and the quantum computing system 102B for executing the quantum operations. The memory 108 is configured to store instructions for execution of steps of the method 200 by the processor(s) or one or more hardware processors 104 (classical hardware processors) and the QPUs 114. The steps of the method 200 of the present disclosure will now be explained with reference to the components or blocks of the system 100 as depicted in FIGS. 2 to 3C. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

The objective of the method 200 is to train a QML model for a given task, and then create its classical equivalent model to enable inference on classical computing systems. Referring to the steps of the method 200, at step 202 of the method 200, the one or more classical hardware processors 104 are configured by the instructions to receive a first training dataset comprising a plurality of inputs $\tilde{X}$ and associated target outputs $\tilde{Y}$. The first training dataset is related to a particular task such as classification or regression where better results can be obtained by using classical equivalent of the QML model than using purely classical ML models. For example, anomaly detection like fraud or rust detection can be improved with QML. In this case, as performing inference on quantum computer is challenging, the classical equivalent can be used.

Other applications can be scenarios like self-driving cars where real time inference is needed. As illustrated in FIG. 3A, in an embodiment, the first training dataset may be pre-processed to obtain a pre-processed dataset. Equations 1 and 2 mathematically represent preprocessing of $\tilde{X}$ and $\tilde{Y}$ using processing function $f$ to obtain the preprocessed dataset comprising $X$ and $Y$.

$$X = f_X(\tilde{X}) \ \ldots\ (1)$$

$$Y = f_Y(\tilde{Y}) \ \ldots\ (2)$$

At step 204 of the method 200, the one or more classical hardware processors 104 and the plurality of QPUs 114 are configured by the instructions to train a Quantum Machine Learning (QML) model using the first training dataset as illustrated in FIG. 3A. Firstly, the quantum computer is prepared in the initial state $|\psi_0\rangle$. Then, a suitable data encoding circuit $U_{enc}(x)$ (alternatively referred to as encoding circuit or encoder) and variational ansatz $U_{var}(\theta)$ are prepared. $x$ is data to be encoded (first training dataset received as input or preprocessed data) and $\theta$ are trainable parameters of variational ansatz (alternatively referred to as QML circuit ansatz or variational ansatz or parametric circuit ansatz). Then, a loss function $C$, a classical optimizer and a suitable measurement strategy $M_1$ for the quantum circuit are chosen based on the task. Further, the plurality of QPUs are configured to encode the plurality of inputs using the encoding circuit $U_{enc}(x)$ according to equation 3. Next, the plurality of QPUs are configured to obtain a plurality of intermediate measurements $u$ associated with the plurality of encoded inputs using the QML model by evolving the plurality of encoded inputs through the variational ansatz according to equation 4 and measuring final state using measurement strategy $M_1$ according to equation 5.

$$|\psi_1\rangle = U_{enc}(x)|\psi_0\rangle \ \ldots\ (3)$$

$$|\psi_2\rangle = U_{var}(\theta)|\psi_1\rangle = U_{var}(\theta)U_{enc}(x)|\psi_0\rangle \ \ldots\ (4)$$

$$u = M_1(|\psi_2\rangle) \ \ldots\ (5)$$

Once the intermediate measurements are obtained, the one or more hardware processors 104 are configured to generate a plurality of predictions corresponding to the plurality of inputs using the plurality of intermediate measurements. A processing function $g$ is applied to the output $u$ to generate prediction $y'$ according to equation 6, wherein $y'$ is the prediction for corresponding input $x \in X$.

$$y' = g(u) \ \ldots\ (6)$$

Once the predictions are generated, a loss value between one of: a) the plurality of predictions and the plurality of associated target outputs ($C(y',y)$), and b) the plurality of intermediate measurements and the plurality of associated target outputs ($C(u,y)$), is determined based on the task performed by the QML model. For example, if the task is binary classification, the probability of a qubit being in 0 or 1 is measured and directly used in the loss function like log-likelihood instead of finding the prediction first. Suppose the task is regression, the measurements are scaled to generate predictions which can then be used in loss functions like mean squared error. Once the loss value is determined, the one or more classical hardware processors 104 are configured to update one or more parameters $\theta$ of the QML model based on the loss value using the classical optimizer.

In an embodiment, the first training dataset is divided into batches and the steps of encoding data, obtaining intermediate measurements, generating predictions and calculating loss value are performed iteratively for all the batches. Then, a mean loss value is calculated using which the parameters $\theta$ of the QML model are updated. Training of the QML model is repeated till convergence to get a final set of trained circuit parameters $\phi$.

Once the QML model is trained, at step 206 of the method 200, the plurality of QPUs 114 are configured to generate a second training dataset using the trained QML model (as illustrated in FIG. 3B). The second training dataset comprises the plurality of inputs and associated plurality of outputs measured from the trained QML model using a measurement strategy $M_2$. For each data point $x$ in the plurality of inputs $X$, output value $r$ is obtained by equation 7. The second training dataset is mathematically represented as in equation 8. The second training dataset contains more information about the model than just the final predictions because the outputs measured using the measurement strategy involves all qubits whereas initial measurement usually uses only one qubit. Hence, the second training dataset generated using measurements from the trained QML model is best suited for training the classical model.

$$r = M_2(U_{var}(\phi)U_{enc}(x)|\psi_0\rangle) \ \dots\ (7)$$

$$(X, R); x \in X, r \in R \ \dots\ (8)$$

Once the second training dataset is generated, at step 208 of the method 200, the one or more classical hardware processors 104 are configured to train a classical machine learning model using the second training dataset to obtain a trained classical model. Further, at step 210 of the method 200, the one or more classical hardware processors 104 are configured to learn a processing function based on predictions from the trained classical model and the plurality of associated target outputs. The combination of the trained classical model and the learned processing function serve as a classical equivalent model of the QML model. The classical equivalent model can then be used for performing inference on any new data received by the system 100 to perform the given task.

USE CASE EXAMPLE: One of the applications of method 200 is fraud detection in credit card transactions. It is an important task that requires real-time analysis with a very short latency. QML can improve the performance of the predictive models but as quantum computing is slow and expensive, it is not possible to use QML for inference. In this case the classical equivalent of the QML model can be used to provide real-time inference and get better results than purely classical models. Method 200 can be applied to obtain the classical equivalent of the QML model as follows: First data is received from open-source databases or proprietary sources like banks and payment processors. This data will have features like time, place and amount of payment and the targets, true or false representing if the transaction was fraudulent or not. The data is divided into training, validation and testing sets, and preprocessed before training the QML model. Preprocessing includes performing Principal Component Analysis to find the most important features. Topmost '$n$' features are taken where '$n$' is the number of qubits used in the QML circuit. After performing PCA, the data is scaled to a range that is usable with quantum circuits like $-\pi/2$ to $\pi/2$. $|0\rangle$ state is used as the initial state. For the $n$ qubits and $n$ features, Angle Encoding is used to encode the data to the quantum computer. RX gates are used on each qubit and the features are encoded as angles of these gates. Strongly Entangling Layer is used as the variational ansatz. This consists of single qubit rotations (these will have the trainable parameters) on all qubits and CNOT gates in a cyclic pattern. Repeat the layer '$l$' times. The probability of first qubit is measured to be in the computation basis state $|0\rangle$ or $|1\rangle$. Probability of $|0\rangle$ corresponds to the probability of the transaction being fraudulent and probability of $|1\rangle$ corresponds to the probability of the transaction being not fraudulent. Then, the model is trained using cross entropy loss function with the Simultaneous perturbation stochastic approximation (SPSA) optimizer and hyperparameter optimization is done using the validation data.

Once training is completed, the second data set is created using the trained QML model by measuring the probability of all Qubits in the computation basis. This means that there will be $2n$ outputs for each input. A deep neural network with $n$ nodes as input layer and $2n$ nodes as output layer is considered as the classical model. It has 5 hidden layers with 256 nodes each and leaky ReLU activation function. The classical model is trained using Adam optimizer with KL divergence loss and validation set is used for hyperparameter optimization. A second ML model (referred to as processing function in method 200) is learned to transform the DNN outputs to predictions by training it with the predictions from the DNN as input and the actual targets as outputs. Once both models are trained, they can be used in sequence to act as the classical equivalent of the QML model. The testing set is used to verify the performance of the classical equivalent. The classical equivalent can then be used for real-time inference.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method (200) comprising:

   receiving (202), via one or more classical hardware processors, a first training dataset comprising a plurality of inputs and a plurality of associated target outputs;
   training (204), via a plurality of Quantum Processing Units (QPUs) and the one or more classical hardware processors, a Quantum Machine Learning (QML) model using the first training dataset;
   generating (206), via the plurality of QPUs, a second training dataset using the trained QML model, wherein the second training dataset comprises the plurality of inputs and associated plurality of outputs measured from the trained QML model;
   training (208), via the one or more classical hardware processors, a classical machine learning model using the second training dataset to obtain a trained classical model; and
   learning (210), via the one or more classical hardware processors, a processing function based on predictions from the trained classical model and the plurality of associated target outputs, wherein combination of the trained classical model and the learned processing function serve as a classical equivalent model of the QML model.

2. The method as claimed in claim 1, wherein training the QML model using the first training dataset comprises:

   encoding, via the plurality of QPUs, the plurality of inputs using an encoding circuit;
   obtaining, via the plurality of QPUs, a plurality of intermediate measurements associated with the plurality of encoded inputs using the QML model;
   generating, via the one or more classical hardware processors, a plurality of predictions corresponding to the plurality of inputs using the plurality of intermediate measurements;
   determining, via the one or more classical hardware processors, a loss value between one of: a) the plurality of predictions and the plurality of associated target outputs, and b) the plurality of intermediate measurements and the plurality of associated target outputs, based on task performed by the QML model; and
   updating, via the one or more classical hardware processors, one or more parameters of the QML model based on the loss value to obtain the trained QML model.

3. A system (100) comprising:

a classical computing system (102A) comprising a memory (108) storing instructions, one or more Input/Output (I/O) interfaces (106), and one or more classical hardware processors (104) coupled to the memory (108) via the one or more I/O interfaces (106); and

a quantum computing system (102B) coupled to the classical computing system (102A) via the one or more I/O interfaces (106), wherein the quantum computing system (102B) comprises a plurality of Quantum Processing Units (QPUs) (114), a signal delivery system (116), a control system (118) and a quantum memory (120), wherein the one or more classical hardware processors (104) and the plurality of QPUs (114) are configured by the instructions to:

receive, via the one or more classical hardware processors, a first training dataset comprising a plurality of inputs and associated target outputs;

train, via the plurality of QPUs and the one or more classical hardware processors, a Quantum Machine Learning (QML) model using the first training dataset;

generate, via the plurality of QPUs, a second training dataset using the trained QML model, wherein the second training dataset comprises the plurality of inputs and associated plurality of outputs measured from the trained QML model;

train, via the one or more classical hardware processors, a classical machine learning model using the second training dataset to obtain a trained classical model; and

learn, via the one or more classical hardware processors, a processing function based on predictions from the trained classical model and the plurality of associated target outputs, wherein combination of the trained classical model and the learned processing function serve as a classical equivalent model of the QML model.

4. The system as claimed in claim 3, wherein the one or more classical hardware processors and the plurality of QPUs are configured to train the QML model using the first training dataset by:

encoding, via the plurality of QPUs, the plurality of inputs using an encoding circuit;

obtaining, via the plurality of QPUs, a plurality of intermediate measurements associated with the plurality of encoded inputs using the QML model;

generating, via the one or more classical hardware processors, a plurality of predictions corresponding to the plurality of inputs using the plurality of intermediate measurements;

determining, via the one or more classical hardware processors, a loss value between one of: a) the plurality of predictions and the plurality of associated target outputs, and b) the plurality of intermediate measurements and the plurality of associated target outputs, based on task performed by the QML model; and

updating, via the one or more classical hardware processors, one or more parameters of the QML model based on the loss value to obtain the trained QML model.

5. One or more non-transitory machine-readable information storage mediums comprising one or more instructions which when executed by one or more classical hardware processors and a plurality of QPUs cause:

receiving, via the one or more classical hardware processors, a first training dataset comprising a plurality of inputs and a plurality of associated target outputs;

training, via the plurality of QPUs and the one or more classical hardware processors, a Quantum Machine Learning (QML) model using the first training dataset;

generating, via the plurality of QPUs, a second training dataset using the trained QML model, wherein the second training dataset comprises the plurality of inputs and associated plurality of outputs measured from the trained QML model;

training, via the one or more classical hardware processors, a classical machine learning model using the second training dataset to obtain a trained classical model; and

learning, via the one or more classical hardware processors, a processing function based on predictions from the trained classical model and the plurality of associated target outputs, wherein combination of the trained classical model and the learned processing function serve as a classical equivalent model of the QML model.

6. The one or more non-transitory machine readable information storage mediums as claimed in claim 5, wherein training the QML model using the first training dataset comprises:

encoding, via the plurality of QPUs, the plurality of inputs using an encoding circuit;

obtaining, via the plurality of QPUs, a plurality of intermediate measurements associated with the plurality of encoded inputs using the QML model;

generating, via the one or more classical hardware processors, a plurality of predictions corresponding to the plurality of inputs using the plurality of intermediate measurements;

determining, via the one or more classical hardware processors, a loss value between one of: a) the plurality of predictions and the plurality of associated target outputs, and b) the plurality of intermediate measurements and the plurality of associated target outputs, based on task performed by the QML model; and

updating, via the one or more classical hardware processors, one or more parameters of the QML model based on the loss value to obtain the trained QML model.

System 100

102A

**Classical hardware processor(s)**
**104**

**Memory 108**

Modules 110

Database 112

I/O Interface(s) 106

102B

Quantum Processing
Units (QPUs)
114

Signal delivery
system
116

Control system
118

Quantum memory
120

**FIG. 1**

200

```
┌─────────────────────────────────────────────────┐
│  Receiving a first training dataset comprising   │      202
│  a plurality of inputs and associated target     │
│  outputs                                         │
└─────────────────────────────────────────────────┘
                        │
                        ▼
┌─────────────────────────────────────────────────┐
│  Training a Quantum Machine Learning (QML) model │      204
│  using the first training dataset                │
└─────────────────────────────────────────────────┘
                        │
                        ▼
┌─────────────────────────────────────────────────┐
│  Generating a second training dataset using the  │      206
│  trained QML model, wherein the second training  │
│  dataset comprises the plurality of inputs and   │
│  associated plurality of outputs measured from   │
│  the trained QML model                           │
└─────────────────────────────────────────────────┘
                        │
                        ▼
┌─────────────────────────────────────────────────┐
│  Training a classical machine learning model     │      208
│  using the second training dataset to obtain a   │
│  trained classical model                         │
└─────────────────────────────────────────────────┘
                        │
                        ▼
┌─────────────────────────────────────────────────┐
│  Learning a processing function based on         │      210
│  predictions from the trained classical model    │
│  and the plurality of associated target          │
│  outputs, wherein combination of the trained     │
│  classical model and the learned processing      │
│  function serve as a classical equivalent model  │
│  of the QML model                                │
└─────────────────────────────────────────────────┘
```

**FIG. 2**

**Classical computing system 102A**

First training
dataset

↓

Preprocessing the first
training dataset

↓

Pre-processed
dataset

Trainable circuit
parameters

Loss
function

Classical
optimizer

Use
measurements

Use
measurem
ent or
prediction
?

Generate
predictions

Use
predictions

Trained Circuit
Parameters

**Quantum computing
system 102B**

Initial state

↓

Data encoding
circuit

↓

QML Circuit
Ansatz

↓

Intermediate
measurements

Trained QML
model

**FIG. 3A**

**Classical computing system**
**102A**

Pre-processed
dataset

Second
training dataset

**Quantum computing system**
**102B**

Trained QML
model

Measurements

FIG. 3B

**Classical computing system 102A**

Second training dataset

Training classical ML
model

Classical optimizer

Learning processing
function

Classical equivalent model

Trained classical
model

Learned processing
function

FIG. 3C

# EUROPEAN SEARCH REPORT

**Application Number**

EP 25 20 2933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRANZ J SCHREIBER ET AL: "Classical surrogates for quantum learning models", ARXIV.ORG, CORNELL UNIVERSITY LIBRARY, 201 OLIN LIBRARY CORNELL UNIVERSITY ITHACA, NY 14853, 23 June 2022 (2022-06-23), XP091256300, * page 1 - page 4 * | 1-6 | INV. G06N3/096 G06N10/60 G06N20/00 G06N3/045 |
| A | MOHAMMAD JUNAYED HASAN ET AL: "Bridging Classical and Quantum Machine Learning: Knowledge Transfer From Classical to Quantum Neural Networks Using Knowledge Distillation", ARXIV.ORG, CORNELL UNIVERSITY LIBRARY, 201 OLIN LIBRARY CORNELL UNIVERSITY ITHACA, NY 14853, 23 November 2023 (2023-11-23), XP091660022, * Abstract; Section 1; Section 2.3; Section 3; Section 4 * | 1-6 | |
| A | AKIMOTO NAKAYAMA ET AL: "Explicit quantum surrogates for quantum kernel models", ARXIV.ORG, CORNELL UNIVERSITY LIBRARY, 201 OLIN LIBRARY CORNELL UNIVERSITY ITHACA, NY 14853, 6 August 2024 (2024-08-06), XP091845128, * page 1 - page 5; figure 1 * | 1-6 | **TECHNICAL FIELDS SEARCHED (IPC)**<br><br>G06N |

The present search report has been drawn up for all claims

| Place of search | Date of completion of the search | Examiner |
|---|---|---|
| The Hague | 30 January 2026 | Popa, Stefan |

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421080344